# EUROPÄISCHE PATENTSCHRIFT

(11) **EP 2 478 510 B1**
(45) Veröffentlichungstag und Bekanntmachung des Hinweises auf die Patenterteilung: **10.12.2014**
(21) Anmeldenummer: 10744918.3
(22) Anmeldetag: 13.08.2010
(51) Int. Cl.: G08G 1/16

(54) **VERFAHREN UND VORRICHTUNG ZUR DARSTELLUNG VON HINDERNISSEN IN EINEM EINPARKHILFESYSTEM VON KRAFTFAHRZEUGEN**
METHOD AND DEVICE FOR REPRESENTING OBSTACLES IN A PARKING ASSISTANCE SYSTEM OF MOTOR VEHICLES
PROCÉDÉ ET DISPOSITIF DE VISUALISATION D'OBSTACLES DANS UN SYSTÈME D'AIDE À LA CONDUITE POUR LE STATIONNEMENT DE VÉHICULES À MOTEUR

(30) Priorität: 14.09.2009 DE 102009029439
(43) Veröffentlichungstag der Anmeldung: 25.07.2012
(73) Patentinhaber: Robert Bosch GmbH, 70442 Stuttgart (DE)
(72) Erfinder: SCHNEIDER, Marcus, 71642 Ludwigsburg (DE); NIEMZ, Volker, 71277 Rutesheim (DE)
(86) Internationale Anmeldenummer: PCT/EP2010/061849
(87) Internationale Veröffentlichungsnummer: WO 2011/029694

(56) Entgegenhaltungen:
- EP-A1- 1 906 208
- EP-A2- 1 510 442
- WO-A1-2005/013235
- US-A1- 2008 309 517

## Beschreibung

### Stand der Technik

Einparkhilfesysteme in verschiedenen Ausprägungen und mit unterschiedlichen Anzeigekonzepten zur Unterstützung des Fahrers bei Einparkvorgängen sind seit langem bakannt. Sie lassen sich im Wesentlichen in zwei Klassen unterteilen, nämlich die Systeme, die auf Distanzmessungen wie beispielsweise mittels Ultraschall-, oder Radarsensensoren basieren, und die videobasierten Systeme. Die auf Distanzmessung basierenden Systeme geben dem Fahrer üblicherweise eine akustische, zum Beispiel kurze Warntöne mit distanzabhängiger Wiederholfrequenz, und/oder optische Warnung wie beispielsweise mithilfe von LED-Zeilen mit distanzabhängiger Anzahl eingeschalteter LEDs. Videobasierte Systeme dagegen umfassen beispielsweise eine Rückfahrkamera und die Videokamera erfasst die Situation im Bereich um den Heckstoßfänger, so dass das entsprechende Bild auf einem Bildschirm im Blickfeld des Fahrers ausgeben werden kann. Gegebenenfalls wird das Videobild zuvor entzerrt, um dem Fahrer ein möglichst realistischen Bild von der Umgebung darzustellen.

In jüngerer Zeit finden auch kombinierte Systeme Verbreitung. Dabei werden in das angezeigte Videobild zum Beispiel Distanzbalken zur Angabe der Distanzmesswerte des Ultraschallsystems eingeblendet.

Der Nachteil von videobasierten Systemen ist, dass sie die volle Aufmerksamkeit des Fahrers erfordern, speziell in Situationen, in denen das Bild nur unzureichende Merkmale zum Abschätzen der Grösse und der Distanz enthält. Auch das Einblenden von Distanzbalken verringert dieses Problem nur geringfügig, da in diesem Fall zwei unterschiedliche Klassen von Informationen, die realen Objekte und die grafisch vereinfachten künstlichen Objekte gleichzeitig vom Fahrer aufzunehmen und zu verarbeiten sind. Auch die zusätzliche akustische Warnung in einem solchen kombinierten System führt nicht zu einer vereinfachten Wahrnehmung durch den Fahrer, weil auch hier noch eine weitere Information zu verarbeiten ist.

Dokument EP1906208 beschreibt ein Einparkhilfesystem.

Ein weiteres Beispiel für ein kombiniertes System zur Unterstützung des Fahrers eines Kraftfahrzuegs beim Einparken ist aus der DE 10 2007 002 262 A1 bekannt. Neben distanzbestimmenden Sensoren ist mindestens eine Kamera in das System integriert. Das System ermöglicht eine graghische Darstellung einer Parklücke unter Einbeziehung der verschiedenen Begrenzungen und der Fahrer kann die Zielposition des eigenen Fahrzeugs mittels Eingabetasten nach seinen Wünschen optimieren und den selbst wahrgenommenen Gegebenheiten anpassen. In diesem Zusammenhang ist aus der DE 10 2007 002 262 A1 ebenfalls bekannt, verschiedene Begrenzungen zu erkennen und zu klassifizieren, so dass die Begrenzungen nach verschiedenen Klassen dargestellt werden. Beispielsweise Pflanztröge, Pflanzen, Mauern und dergleichen können unterschiedlich angezeigt werden, damit der Fahrer manche Hindernisse als nachgiebig oder beweglich relativieren kann und somit das Einfahren in Parklücken ermöglicht wird, die das System von sich aus nicht in Erwägung gezogen hätte. Als optische Unterstützung kann die Parklücke und ihre Begrenzungen und/oder das eigene Fahrzeug teilweise transparent dargestellt werden, um feststellen zu können.

Eine vereinfachte Wahrnehmung der tatsächlichen Umfeldsituation durch den Fahrer insbesondere im Hinblick auf nahe zum Fahrzeug befindliche Hindernisse gegenüber weiter beabstandeten Hindernissen ist durch dieses System jedoch nicht erreicht.

### Offenbarung der Erfindung

Das erfindungsgemäße Verfahren gemäß Anspruch 1, welches mit der ebenfalls erfindungsgemäßen Vorrichtung gemäß Anspruch 6 durchgeführt werden kann, hat gegenüber dem Stand der Technik den Vorteil, dass es den Fahrer in die Lage versetzt, mit einem einzigen Blick auf die Anzeige des Einparkhilfesystems die Relevanz von Hindernissen hinsichtlich ihres Abstands zu erfassen und zu verstehen. Zudem ist es durch die Kantenverstärkung der nahen Hindernisse geeignet, auch ohne zusätzliche grafische und/oder akustische Komponenten zuverlässig einsetzbar zu sein. Auf diese Weise wird der Fahrer entlastet, da er nicht mehr verschiedene Anzeigeelemente bzw- verschiedene Arten von Hinweisen gleichzeitig erfassen muss.

Weiterhin ist vorteilhaft, dass das Verfahren sowohl die Komplexität der Anzeige beziehungsweise der Warnelement reduziert als auch insbesondere durch einen einfachen Aufbau die Zahl und Art der benötigten Komponenten auf ein Minimum beschränkt. Dadurch kann das Verfahren der vorliegenden Erfindung sowohl kostengünstig produziert werden als auch den Fahrer optimal informieren ohne ihn durch zu viele verschiedene Informationen zu verwirren.

Demgemäß ist der Gegenstand der vorliegenden Erfindung ein Verfahren zur Darstellung von Hindernissen in einem Einparkhilfesystem von Kraftfahrzeugen umfassend die folgenden Schritte:
a) Ermitteln eines Umfeldbildes und Erkennen von darin befindlichen Hindernissen,
b) Ermitteln von mindestens einem Abstandswert und/oder einer Winkellage der erkannten Hindernisse,
c) Anwenden eines kantenverstärkenden Verfahrens auf Bereiche des Umfeldbildes in Abhängigkeit der ermittelten Abstandswerte und/oder Winkellagen und
d) Anzeigen der Kantenverstärkung mit dem ermittelten Umfeldbild in einer Anzeige des Einparkhilfesystems.

Die abstandsbedingten Relevanzen von einzelnen Hindernissen lassen sich aufgrund der erfindungsgemäßen Kantenverstärkung vom Fahrer leichter wahrnehmen, wodurch dessen Aufmerksamkeit auf die relevanten Hindernisse gelenkt werden kann. Ein Überangebot an Bildinformationen wird mit Hilfe des erfindungsgemäßen Verfahrens damit gefiltert und optimiert auf die Bedürfnisse des Fahrers bezogen auf die Einparksituation angezeigt.

Als kantenverstärkendes Verfahren sind beispielsweise grafikverarbeitende, mathematische Softwaresysteme basierend auf Kantenfilter und/oder Kantenoperatoren wie zum Beispiel Sobel, Laplace, Canny-Algorithmus, Kirsch-Operator und ähnöiche geeignet im sinne der vorliegenden Erfindung. Insbesondere soche Systeme, die auf dem Betrag der Gradienten basieren, so dass im Bereich von Kanten so genannte Gradientengebirge entstehen, sind zur durchführung der Kantenverstärkung bevorzugt.

Durch anschließende Konturerkennungsverfahren wie beispielsweise dem Freeman-Code können Konturanhäufungen dann zu rudimentären Objekten gruppiert werden, um welche ein Bounding-Box gezogen werden kann.

Moderne Parkhilfesysteme liefern bereits Informationen zu der Distanz zu den Hindernissen und auch zu der Richtung der Hindernisse, so dass eine Implementierung in bereits bestehende Hardware erfolgen kann.

Weitere Vorteile und vorteilhafte Ausgestaltungen des erfindungsgemäßen Gegenstandes sind der Beschreibung, den Zeichnungen und den Patentansprüchen zu entnehmen.

In einer bevorzugten Ausgestaltung des erfindungsgemäßen Verfahrens können die erkannten Hindernisse in Abhängigkeit der ermittelten Abstandswerte und/oder der Winkellage eingefärbt und/oder animiert werden.

Dadurch kann zusätzlich eine eindeutige, vom Fahrer leicht zu erfassende Beziehung zwischen dem Bildbereich mit dem zu beachtenden Hindernis und der Relevanz des Hindernisses hergestellt und angezeigt werden.

Weiterhin vorteilhaft können in Abhängigkeit der ermittelten Abstandswerte und/oder Winkellagen ermittelte Hindernisse mit einer Kantenabschwächung und/oder unscharf angezeigt werden.

Auf diese Weise kann dem Fahrer auf einen kurzen blick vermittelt werden, welche Hindernisse wirklich relevant sind, ohne die nicht relevanten Hindernisse völlig wegzulassen.

In einer weiteren Ausgestaltung des erfindungsgemäßen Verfahrens kann die Kantenverstärkung umso stärker angezeigt werden je näher sich das erkannte Hindernis zum Kraftfahrzeug befindet und/oder die Kantenabschächung umso stärker angezeigt werden je weiter sich das erkannte Hindernis zum Kraftfahrzeug befindet.

Damit kann vorteilhalfterweise noch deutlicher eine nach Relevanz geordnete anzeige für den Fahrer bereitgestellt werden, die vom Fahrer nicht verlangt Zusatzinformationen wie zum Beispiel sich verfärbende Rechtecke oder Balken zu verkennen und zu verarbeiten. Auch für farbenblinde und/oder hörgeschädigte Fahrer ist das erfindungsgemäße System damit bestens geeignet.

Auf Basis des erkannten Hindernisses und in Abhängigkeit der ermittelten Abstandswerte und/oder Winkellagen kann alternativ oder zusätzlich ein ganzer Bereich des Umfeldbildes eingefärbt angezeigt werden.

Dies dient der nochmaligen Herausstellung der relevanten Hindernisse und deren Bildbereichen im Gegensatz zu den weniger relevanten Bereichen des angezeigten Umfeldbildes.

Ein weiterer Gegenstand der vorliegenden Erfindung ist eine Vorrichtung zur Darstellung von Hindernissen in einem Einparkhilfesystem von Kraftfahrzeugen umfassend
- mindestens eine Kamera zur Ermittlung eines Umfeldbildes,
- Mittel zum Erkennen von Hindernissen in dem Umfeldbild,
- Mittel zur Bestimmung von Abstandswerten und/oder Winkellagen von erkannten Hindernissen,
- Mittel zur Ausführung einer Kantenverstärkung bezogen auf die Hindernisse oder Teile von Hindernissen enthaltenden Bereiche des Umfeldbildes und
- eine Anzeige zur Darstellung des Umfeldbildes mit der Kantenverstärkung.

Unter anderen können die Mittel zum Erkennen von Hindernissen in dem Umfeldbild Software-basiert sein.

Wie vorstehend bereits ausgeführt können neben der mindestens einen Kamera auch Sensoren wie beispielsweise Ultraschallsensoren zur Bestimmung von Abstandswerten und/oder Winkellagen der Hindernisse vorgesehen sein.

Die Mittel zur Ausführung einer Kantenverstärkung sind bevorzugt ebenfalls Software-basierte mathematische Algorithmen, die erfindungsgemäß bevorzugt in einer zentralen Steuerungseinheit oder in Kraftfahrzeug üblichen Medien-Steuergeräten integriert werden können.

Die Anzeige zur Darstellung des Umfeldbildes kann ein in Fraftfahrzeugen übliches Display sein, wie es auch für die integrierte Navigation verwendet wird. Durch Überlagerung der Kantenverstärkung, die das Steuergerät bestimmt hat, mit dem Umfeldbild der Kamera kann eine klare und schnell erfassbare Information über die Relevanz von Hindernissen für den Fahrer zur Verfügung gestellt werden.

In einer bevorzugten Ausführungsform der erfindungsgemäßen Vorrichtung können die Mittel zur Bestimmung von Abstandwerten und/oder Winkellagen Ultraschall oder Radarsensoren sein.

Auf diese Weise ist eine robuste, zuverlässige und in der Herstellung kostengünstige Bestimmung der benötigten Daten zu den Abstandswerten für die Hindernisse und/oder deren Winkellagen möglich.

In einer weiteren vorteilhaften Ausführungsform der erfindungsgemäßen Vorrichtung können die Mittel zum Erkennen von Hindernissen und/oder die Mittel zur Ausführung einer Kantenverstärkung in einem Steuergerät integriert sein.

Die Kamera kann bevorzugterweise einen auf die Mittel zum Erkennen von Hindernissen abgestimmten Öffnungswinkel aufweisen.

Dadurch kann in einfacher Weise ein optimierter Beobachtungsbereich festgelegt werden.

In einer weiteren bevorzugten Ausgestaltung der erfindungsgemäßen Vorrichtung kann die Kamera das Umfeldbild in Form eines digitalen Signals erzeugen. Hierdurch wird sowohl die Hindernis-Erkennung als auch die Kantenverstärkung durch Software-basierte Systeme ermöglicht.

### Zeichnungen

Nachfolgend wird die Erfindung unter Bezugnahme auf die anliegenden Zeichnungen anhand von bevorzugten Ausführungsbeispielen näher erläutert.

Es zeigen:
Figur 1 zeigt schematisch in einer Draufsicht ein Parkhilfesystem in einer Ausführungsform gemäß der vorliegenden Erfindung.
Figur 2 zeigt eine beispielhafte Gegenüberstellung des Funktionsprinzips des erfindungsgemäßen Verfahrens (rechts) gegenüber der herkömmlichen Ansicht (links).

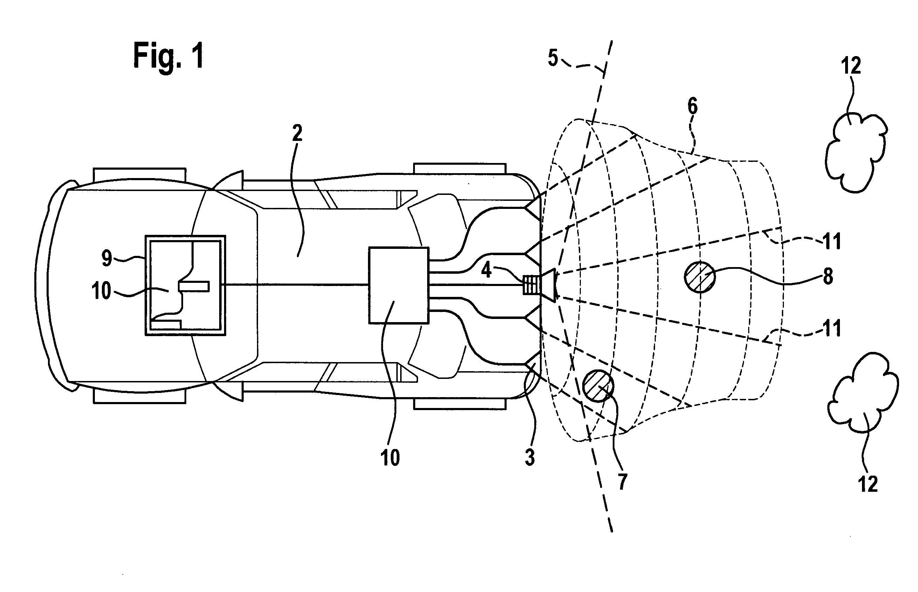

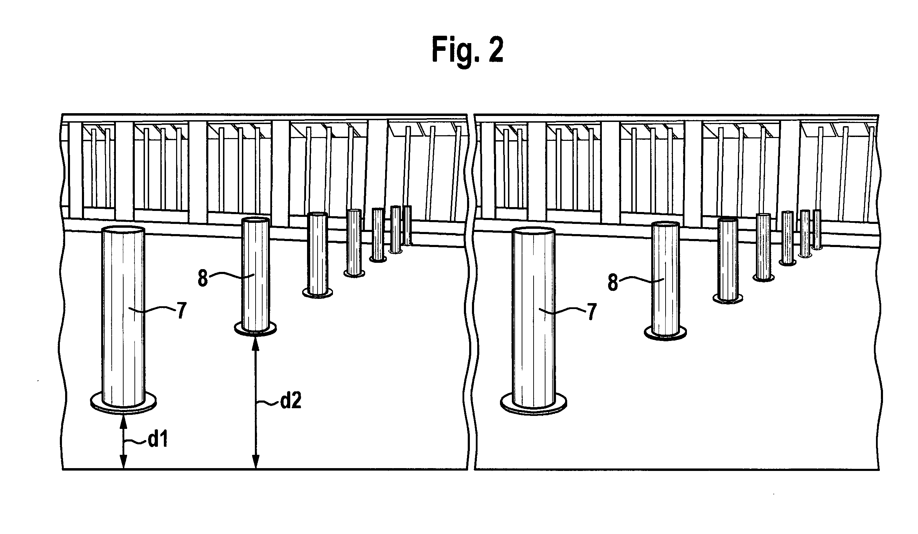

In Figur 1 wird schematisch ein Einparkhilfesystem 1 gemäß der vorliegenden Erfindung dargestellt. An ein Steuergerät 10 in einen Fahrzeug 2 sind zum einen mehrere im Fahrzeugheck verbaute Ultraschallsensoren 3, zum anderen eine Videokamera 4 mit dem Öffnungswinkel 5 zur Aufnahme eines Umfeldbildes angeschlossen. Die Ultraschallsensoren decken einen Ultraschall-Detektionsbereich 6 ab, dessen Hauptanteil von der Videokamera 4 überblickt wird. Innerhalb des Detektionsbereichs 6 befinden sich im gegebenen Beispiel mehrere Objekte bzw. Hindernisse 7 und 8, welche beispielsweise Pfosten darstellen. Außerhalb des Detektionsbereichs 6 befinden sich ebenfalls mehrere Objekte 12. Diese werden nur noch von der Kamera 4 mit dem Öffnungswinkel 5 erfasst. Das Detektionsfeld 6 der Ultraschallsensoren ist in mehrere Richtungszonen 11 mit definierten Sensor-Öffnungswinkeln unterteilt. Objekte, die von den Ultraschallsensoren 3 erfasst werden, werden im Steuergerät 10 mittels geeigneter Auswertungsalgorithmen wie zum Beispiel Trilateration den einzelnen Zonen 11 zugeordnet. Jeder Zone 11 wird ein Bildbereich im Umfeldbild 20 zugeordnet (vgl. Figur 2). Das Umfeldbild 20 wird entsprechend der erfassten Objekte 7 und 8 vom Steuergerät 10 geometrisch manipuliert (vgl. Figur 2) und das Ergebnis wird auf dem Bildschirm 9 ausgegeben.

In Figur 2 wird eine beispielhafte Gegenüberstellung des Funktionsprinzips des erfindungsgemäßen Verfahrens, welches mit der konturverstärkten Anzeigenansicht rechts dargestellt ist, und des ursprünglichen Umfeldbildes links dargestellt. Die Kamera (hier nicht dargestellt) erfasst die Umgebung hinter dem Fahrzeug und erzeugt ein digital auswertbares Umfeldbild. Gleichzeitig erfassen die Ultraschallsensoren (hier nicht dargestellt) mehrere Objekte, 7 und 8, und ermitteln den jeweiligen Winkel und die Distanzen d1 und d2 zu den Objekten 7 und 8. Das Objekt 8 liegt gemäß einer Annahme in diesem Beispiel außerhalb des Anwendungsfall des vorgestellten Algorithmus. Nun werden die Bildspalten im gegebenen Beispiel kantenverstärkt und auf Basis der resultierenden Kontur ein Objekt gebildet. Das entsprechende kantenverstärkte Objekt wird als Überlagerung im rechten Bild dargestellt.

## Patentansprüche

1. Verfahren zur Darstellung von Hindernissen in einem Einparkhilfesystem (1) von Kraftfahrzeugen (2) umfassend die folgenden Schritte:
a) Ermitteln eines Umfeldbildes und Erkennen von darin befindlichen Hindernissen (7, 8),
b) Ermitteln von mindestens einem Abstandswert und/oder einer Winkellage der erkannten Hindernisse,
c) Anwenden eines kantenverstärkenden Verfahrens auf Bereiche des Umfeldbildes in Abhängigkeit der ermittelten Abstandswerte und/oder Winkellagen und
d) Anzeigen der Kantenverstärkung mit dem ermittelten Umfeldbild in einer Anzeige (9) des Einparkhilfesystems.

2. Verfahren nach Anspruch 1 **dadurch gekennzeichnet, dass** die erkannten Hindernisse (7, 8) in Abhängigkeit der ermittelten Abstandswerte und/oder der Winkellage eingefärbt und/oder animiert werden.

3. Verfahren nach Anspruch 1 oder 2 **dadurch gekennzeichnet, dass** in Abhängigkeit der ermittelten Abstandswerte und/oder Winkellagen ermittelte Hindernisse (7, 8) mit einer Kantenabschwächung und/oder unscharf angezeigt werden.

4. Verfahren nach einem der vorhergehenden Ansprüche **dadurch gekennzeichnet, dass** die Kantenverstärkung umso stärker angezeigt wird je näher sich das erkannte Hindernis (7, 8) zum Kraftfahrzeug (2) befindet und/oder die Kantenabschächung umso stärker angezeigt wird je weiter sich das erkannte Hindernis (7, 8) zum Kraftfahrzeug (2) befindet.

5. Verfahren nach einem der vorhergehenden Ansprüche **dadurch gekennzeichnet, dass** auf Basis des erkannten Hindernisses (7, 8) und in Abhängigkeit der ermittelten Abstandswerte und/oder Winkellagen ein ganzer Bereich des Umfeldbildes eingefärbt angezeigt wird.

6. Vorrichtung zur Darstellung von Hindernissen (7, 8) in einem Einparkhilfesystem von Kraftfahrzeugen (2) umfassend
- mindestens eine Kamera (4) zur Ermittlung eines Umfeldbildes,
- Mittel zum Erkennen von Hindernissen in dem Umfeldbild,
- Mittel zur Bestimmung von Abstandswerten und/oder Winkellagen von erkannten Hindernissen (3),
- Mittel zur Ausführung einer Kantenverstärkung bezogen auf die Hindernisse oder Teile von Hindernissen enthaltenden Bereiche des Umfeldbildes und
- eine Anzeige (9) zur Darstellung des Umfeldbildes mit der Kantenverstärkung.

7. Vorrichtung nach Anspruch 6 **dadurch gekennzeichnet, dass** die Mittel zur Bestimmung von Abstandwerten und/oder Winkellagen Ultraschall oder Radarsensoren (3) sind.

8. Vorrichtung nach einem der Ansprüche 6 oder 7 **dadurch gekennzeichnet, dass** die Mittel zum Erkennen von Hindernissen und/oder die Mittel zur Ausführung einer Kantenverstärkung in einem Steuergerät (10) integriert sind.

9. Vorrichtung nach einem der Ansprüche 6 bis 8 **dadurch gekennzeichnet, dass** die Kamera (4) einen auf die Mittel zum Erkennen von Hindernissen abgestimmten Öffnungswinkel aufweist.

10. Vorrichtung nach einem der Ansprüche 6 bis 9 **dadurch gekennzeichnet, dass** die Kamera (4) das Umfeldbild in Form eines digitalen Signals erzeugt.

## Claims

1. Method for representing obstacles in a parking assistance system (1) of motor vehicles (2), comprising the following steps:
a) determining an image of the surroundings and detecting obstacles (7, 8) located therein,
b) determining at least one distance value and/or one angular position of the detected obstacles,
c) applying an edge reinforcing method to regions of the image of the surroundings as a function of the determined distance values and/or angular positions, and
d) displaying the edge reinforcement with the determined image of the surroundings in a display (9) of the parking assistance system.

2. Method according to Claim 1, **characterized in that** the detected obstacles (7, 8) are colored and/or animated as a function of the determined distance values and/or the angular position.

3. Method according to Claim 1 or 2, **characterized in that** obstacles (7, 8) which are determined as a function of the determined distance values and/or angular positions are displayed with edge attenuation and/or out of focus.

4. Method according to one of the preceding claims, **characterized in that** the edge reinforcement is displayed more strongly the nearer the detected obstacle (7, 8) is located to the motor vehicle (2) and/or the edge attenuation is displayed more strongly the further the detected obstacle (7, 8) is located from the motor vehicle (2).

5. Method according to one of the preceding claims, **characterized in that** an entire region of the image of the surroundings is displayed colored on the basis of the detected obstacle (7, 8) and as a function of the determined distance values and/or angular positions.

6. Device for representing obstacles (7, 8) in a parking assistance system of motor vehicles (2), comprising
- at least one camera (4) for determining an image of the surroundings,
- means for detecting obstacles in the image of the surroundings,
- means for determining distance values and/or angular positions of detected obstacles (3),
- means for carrying out edge reinforcement with respect to the regions of the image of the surroundings containing obstacles or parts of obstacles, and
- a display (9) for representing the image of the surroundings with the edge reinforcement.

7. Device according to Claim 6, **characterized in that** the means for determining distance values and/or angular positions are ultrasound or radar sensors (3).

8. Device according to either of Claims 6 and 7, **characterized in that** the means for detecting obstacles and/or means for carrying out edge reinforcement are integrated in a control device (10).

9. Device according to one of Claims 6 to 8, **characterized in that** the camera (4) has an angle of aperture which is matched to the means for detecting obstacles.

10. Device according to one of Claims 6 to 9, **characterized in that** the camera (4) generates the image of the surroundings in the form of a digital signal.

## Revendications

1. Procédé de visualisation d'obstacles dans un système d'aide au stationnement (1) de véhicules automobiles (2) comprenant les étapes suivantes :
a) calcul d'une image d'environnement et détection d'obstacles (7, 8) se trouvant dedans ;
b) calcul d'au moins une valeur de distance et/ou d'une position angulaire des obstacles détectés ;
c) application d'un procédé de renforcement de bordure sur les zones de l'image d'environnement en fonction des valeurs de distance et/ou des positions angulaires calculées ; et
d) affichage du renforcement de bordure avec l'image d'environnement calculée sur un affichage (9) du système d'aide au stationnement.

2. Procédé selon la revendication 1, **caractérisé en ce que** les obstacles détectés (7, 8) sont colorés et/ou animés en fonction des valeurs de distance et/ou de la position angulaire calculée.

3. Procédé selon la revendication 1 ou 2, **caractérisé en ce que** les obstacles (7, 8) calculés en fonction des valeurs de distance et/ou positions angulaires calculées sont affichés de façon floutée et/ou avec un affaiblissement de bordure.

4. Procédé selon l'une quelconque des revendications précédentes, **caractérisé en ce que** le renforcement de bordure est affiché de plus en plus nettement à mesure que l'obstacle détecté (7, 8) s'approche du véhicule automobile (2) et/ou que l'affaiblissement de bordure est affiché de plus en plus faiblement plus l'obstacle détecté (7, 8) se trouve loin du véhicule automobile (2).

5. Procédé selon l'une quelconque des revendications précédentes, **caractérisé en ce que** toute une zone de l'image d'environnement est colorée est affichée sur la base de l'obstacle détecté (7, 8) et en fonction des valeurs de distance et/ou des positions angulaires calculées.

6. Dispositif de visualisation d'obstacles (7, 8) dans un système d'aide au stationnement de véhicules automobiles (2) comprenant :
- au moins une caméra (4) servant à calculer une image d'environnement ;
- des moyens de détection d'obstacles dans l'image d'environnement ;
- des moyens de détermination de valeurs de distance et/ou de positions angulaires d'obstacles détectés (3) ;
- des moyens de réalisation d'un renforcement de bordure relatif aux zones de l'image d'environnement contenant des obstacles ou parties d'obstacles ; et
- un affichage (9) de visualisation de l'image d'environnement avec un renforcement de bordure.

7. Dispositif selon la revendication 6, **caractérisé en ce que** les moyens de détermination de valeurs de distance et/ou de positions angulaires sont des capteurs (3) radar ou ultrason.

8. Dispositif selon l'une quelconque des revendications 6 ou 7, **caractérisé en ce que** les moyens de détection d'obstacles et/ou les moyens de réalisation d'un renforcement de bordure sont intégrés dans un appareil de commande (10).

9. Dispositif selon l'une quelconque des revendications 6 à 8, **caractérisé en ce que** la caméra (4) comporte un angle d'ouverture calé sur les moyens de détection d'obstacles.

10. Dispositif selon l'une quelconque des revendications 6 à 9, **caractérisé en ce que** la caméra (4) produit l'image d'environnement sous la forme d'un signal numérique.
